# EUROPÄISCHE PATENTSCHRIFT

(11) **EP 0 676 580 B1**
(45) Veröffentlichungstag und Bekanntmachung des Hinweises auf die Patenterteilung: **16.08.2001**
(21) Anmeldenummer: 95810229.5
(22) Anmeldetag: 06.04.1995
(51) Int. Cl.: F16L 59/12, F16L 59/05, F16L 59/02, F16L 59/16

(54) **Mantelteil**
Lagging element
Pièce à revêtement

(30) Priorität: 08.04.1994 CH 105594; 04.05.1994 CH 140394; 18.11.1994 CH 348394
(43) Veröffentlichungstag der Anmeldung: 11.10.1995
(73) Patentinhaber: THERMCEL AG, 3011 Bern (CH)
(72) Erfinder: Tschanz, Otto, 3123 Belp (CH)
(74) Vertreter: Roshardt, Werner Alfred, Dipl.-Phys.

(56) Entgegenhaltungen:
- EP-A- 0 141 986
- DE-A- 2 943 123
- DE-A- 3 343 959
- DE-U- 7 824 593
- DE-U- 9 101 393
- US-A- 5 054 513

## Beschreibung

### Technisches Gebiet

Die Erfindung betrifft einen Mantelteil zum Erstellen einer aus mehreren Mantelteilen zusammengesetzten thermischen Isolation für Geräte, Installationen u. dgl. Weiter betrifft die Erfindung eine Isolation für Installationen wie Rohrleitungsabschnitte, Ventile, Pumpen und dergleichen, aus mehreren zusammenfügbaren Mantelteilen.

### Stand der Technik

Aufgrund gesetzlicher Vorschriften ist es erforderlich, Heizungsinstallationen mit den nach Umständen bestmöglichen thermischen Isolationen auszurüsten.

Es ist bekannt, Heizungsrohre, Ventile und Pumpen in schalenförmige, mit Steinwolle gefüllte Isolationsgehäuse einzubetten. Das schalenförmige Gehäuse besteht dabei aus PVC und wird aus plattenförmigem Rohmaterial individuell hergerichtet.

Der Nachteil dieser bekannten Lösung ist die aufwendige Fertigung und Montage.

Aus der DE-U 91 01 393.3 sind Verschalungen zur Erstellung von thermischen Isolationen bekannt, die aus zwei zusammensteckbaren Kunststoffhalbschalen bestehen. Die Kunststoffhalbschalen besitzen zu ihrer Positionierung gegenüber den Installationselementen Stützwände, welche quer zur Längsrichtung der Installationselemente angebracht sind. Sie weisen eine halbkreisförmige Öffnung auf, deren Durchmesser dem Durchmesser des zu isolierenden Heizungsrohres entspricht. Nachteilig ist, dass die Kunststoffhalbschalen im Voraus auf die zu isolierenden Installationselemente, insbesondere das Heizungsrohr, angepasst werden müssen.

Weiter beschreibt die DE-29 43 123 Halbschalen zur Isolation von zylindrischen Körpern. Sie weisen auf der Innenseite Rippen auf, die spiralförmig, radial oder in Längsrichtung verlaufen. Beschrieben sind auch Erhebungen, die aus elastischem Material bestehen können. Beides dient der Verringerung der Berührungsfläche zwischen den Halbschalen und den zu isolierenden Körpern. Eine Isolation von zylindrischen Körpern verschiedener Durchmesser mit einem einzigen Typ Halbschalen ist nicht offenbart und, wenn überhaupt, nur in sehr beschränktem Ausmass möglich.

### Darstellung der Erfindung

Aufgabe der Erfindung ist es, einen Mantelteil und eine Isolation der eingangs genannten Art anzugeben, die in grossen Stückzahlen effizient herstellbar ist und trotzdem mit geringem Aufwand an individuelle Gegebenheiten angepasst werden kann.

Gemäss der Erfindung wird die Aufgabe dadurch gelöst, dass innenseitig des Mantelteils flexible Stützhilfen ausgebildet sind, derart, dass die zusammengesetzte Isolation Halt an den Geräten bzw. Installationen unabhängig von den genauen Aussenabmessungen der genannten Geräte und Installationen hat und dass den Stützhilfen Wandvertiefungen zugeordnet sind, um einen seitlichen Freiraum zur Verfügung zu stellen, in welchen die Stützhilfen bei Deformation ausweichen können.

Die Erfindung ermöglicht es, mit denselben Mantelteilen z. B. Heizungsrohre unterschiedlichen Aussendurchmessers zu isolieren. Die flexiblen Stützhilfen sorgen dafür, dass die Isolationshülle einen hinreichenden Halt am Heizungsrohr (oder einer sonstigen Installation) hat, wobei die Isolationshülle bezüglich des zu isolierenden Teils zentrisch gehalten ist.

Vorzugsweise sind die Mantelteile einstückig aus wärmebeständigem Isolationsmaterial gebildet. Die Stützhilfen sind - als integraler Bestandteil - an der Innenwandung der Mantelteile angeformt. D. h. sie bestehen aus demselben Material wie der übrige Mantelteil.

Die Stützhilfen sind in Wandvertiefungen mit seitlichem Freiraum gebildet, um bei Deformation in den Freiraum der Wandvertiefung ausweichen zu können. Ob eine solche Wandvertiefung vorgesehen werden soll oder nicht, hängt auch von der Elastizität des Materials ab. Bei relativ steifem Material wird durch die geeignete Ausgestaltung der Stützhilfen und der Wandvertiefungen resp. -aussparungen die erforderliche Deformierbarkeit geschaffen.

Vorzugsweise sind die Stützmittel durch eine Mehrzahl deformierbarer, insbesondere stauchbarer Zapfen gebildet. Die Stützhilfen können auch als Rippen ausgeführt sein. Ist der Mantelteil zum Isolieren von Leitungsrohren ausgestaltet, dann können quer zur Leitungsrichtung verlaufende deformierbare Rippen von besonderem Vorteil sein, indem sie eine Aufteilung des Luftvolumens zwischen Leitungsrohr und Isolierhülle bewirken (Minimierung der thermischen Konvektion).

Gemäss einer besonders bevorzugten Ausführungsform sind die Mantelteile einstückig und bestehen aus wärmebeständigem expandiertem Polystyrol. Dieses Material kann für die unterschiedlichsten Isolationen verwendet werden. Insbesondere beschränkt sich seine Anwendung nicht auf Mantelteile mit integrierten Stützhilfen an der Innenseite.

Die erfindungsgemässen Hartschaumstoffteile können in verschiedenen Standardgrössen vorgefertigt und dann mit Werkzeugen an die jeweiligen Gegebenheiten angepasst werden.

Zur Herstellung der erfindungsgemässen Teile eignet sich insbesondere ein expandierbares Polystyrol (auch expandierbares Polystyren genannt). Diesem bei sehr hohem Druck expandierenden Schaumkunststoff wird zudem mit Vorteil ein flammhemmendes Mittel beigemischt. Das Material ist gegen mechanische Einflüsse ziemlich beständig, lässt sich aber trotzdem gut zuschneiden resp. bearbeiten. Nicht zuletzt ist es aus ökologischen Gesichtspunkten (im Vergleich zu PVC) unbedenklich.

In der Regel besteht die Isolation aus genau zwei Teilen, wobei der eine im Querschnitt U-profilförmig und der andere C-profilförmig ist. Mit ihren jeweils offenen Seiten sind die beiden Querschnitte dimensionsmässig aufeinander abgestimmt. Unter einem U-förmigen Profil ist dabei ein im wesentlichen rechtwinklig zueinander stehende Seiten aufweisendes Profil zu verstehen. Im Gegensatz dazu ist unter einem C-förmigen Querschnitt ein abgerundetes oder zumindest aus mehreren nicht rechtwinklig zueinander stehenden Seiten gebildetes Profil zu verstehen. Der Vorteil einer derartigen Formgebung besteht in der vielseitigen Anwendbarkeit. Mit derartigen Teilen können die meisten Installationen isoliert werden, wobei der Platzbedarf relativ gering ist.

Die Teile weisen Stirnseiten mit halbkreisförmigen Ausnehmungen zur Bildung der für die zu- bzw. wegführenden Leitungen der Heizungsinstallation erforderlichen Oeffnungen auf. Vorzugsweise werden die Ausnehmungen erst nachträglich angebracht. D. h. die in grossen Stückzahlen hergestellten schalenartigen Teile sind frei von anwendungsspezifischen Bohrungen oder Ausnehmungen. Letztere werden also z. B. erst vor Ort angebracht.

Um ein einfaches und positionsgenaues Zusammenfügen zu ermöglichen, kann ein Teil stirnseitig Führungsmittel aufweisen. Diese positionieren die beiden zusammenfügbaren Hälften relativ zueinander. Vorzugsweise sind Führungslaschen geschützt innenseitig ausgebildet. Es ist in diesem Fall auch möglich, die Teile zur Reduktion der Wandstärke aussenseitig abzutragen (was bei ungünstigen Platzverhältnissen u. U. erforderlich sein kann), ohne dass die Laschen in ihrer Funktion beeinträchtigt werden.

Um ein wiederholtes und beschädigungssicheres Oeffnen der Teile im Rahmen späterer Wartungs- oder Reparaturarbeiten zu gewährleisten empfiehlt es sich, die Formteile, insbesondere die erwähnten Führungslaschen derart auszubilden, dass sie verhakungsfrei zusammenfügbar sind. Sind nämlich hakenartig ineinandergreifende Fixationselemente an den Teilen angeformt, dann kann es bei nachlässiger Handhabung der Teile vorkommen, dass die erwähnten hakenartigen Elemente beschädigt werden und damit die ganze Isolation nicht mehr brauchbar ist.

Um die Teile an der in Frage stehenden Heizungsinstallation zu fixieren resp. um sie miteinander zu verbinden, sind mindestens ein Band und ein Klemmverschluss vorgesehen. Die beiden Teile werden von beiden Seiten an das Ventil angelegt und z. B. mit zwei Bändern umwickelt. Der Klemmverschluss erlaubt ein einfaches Spannen und Fixieren der Bänder.

Als Oeffnung für den Durchtritt einer Ventilstellradachse (Ventilhahn) ist z. B. an entsprechender Stelle in der Mitte des Teils eine Bohrung angebracht. Weitere Bohrungen oder Oeffnungen können im Bedarfsfall für sonstige Bedien- bzw. Betätigungselemente oder für elektrische Zuführungen vorgesehen sein. In der Regel lassen sich aber elektrische Zuführungen ohne spezielle Vorkehrungen zwischen den Formteilen herausführen.

Besonders vorteilhaft ist es, wenn die Teile angeformte Verbindungsmittel zum formschlüssigen gegenseitigen Verbinden aufweisen. Dies insbesondere dann, wenn ein mehrfaches, beschädigungsfreies Oeffnen und Schliessen nicht gewährleistet werden muss. Dies trifft insbesondere für Rohrleitungsisolationen zu. Die erfindungsgemässen Teile sind zu diesem Zweck als Rohrhalbschalen ausgebildet, wobei sie je nach Anwendung als gerades, gewinkeltes, rundes, T-förmiges etc. Halbschalenstück geformt sind.

Mit Vorteil weisen die Teile sowohl stirnseitig als auch längsseitig für den Formschluss geeignete Verbindungsmittel auf. Ueber die längsseitigen Verbindungsmittel lassen sich dabei zwei bezüglich der Längsachse des zu isolierenden Rohrleitungsabschnitts komplementäre Teile zusammenfügen. Aufgrund der stirnseitigen Kupplungen lassen sich auch die in Längsachse des Rohrleitungssystems aufeinanderfolgenden Teile verbinden. Es ist dadurch möglich, ein ganzes Leitungssystem mit geringem Aufwand und ohne Drahtschlingen zu einer zusammenhängenden, quasi kompakten Isolation zusammenzufügen.

Anstelle eines Formschlusses ist unter gewissen Umständen auch ein Kraftschluss denkbar. Ein solcher lässt sich nämlich durch eine "einseitige Massnahme" realisieren, d. h. an der Verbindungsstelle ist nur der eine Teil speziell ausgebildet, während der andere ein unbearbeitetes Ende aufweist. Dies hat den Vorteil, dass das unbearbeitete Ende je nach spezifischem Anwendungsfall beliebig abgelängt werden kann, ohne dass die Kupplungsmöglichkeit verloren geht. Bei Formschluss mit spezifisch komplementär ausgebildeten Enden ist ein Ablängen nämlich nicht möglich.

Eine vorteilhafte Art zur Realisierung des Kraft- oder Formschlusses besteht in einer Rippen-Rillen-Konstruktion zusammenzufügender Randflächen. Zudem ist die genannte Konstruktion vorzugsweise achsensymmetrisch (bezüglich der entsprechenden Rohrleitungslängsachse). Dies bedeutet, dass zwei identische Teile miteinander verbunden werden können. Dass dies nicht nur für den Anwender, sondern auch bei der Herstellung und im Vertrieb Vorteile hat, liegt auf der Hand.

Um an den Stellen, an denen die Teile zusammengefügt sind, einen möglichst guten Isolationswert zu erreichen, können die Teile eine gerillte, im Querschnitt zickzackförmige Kontaktfläche aufweisen. Auf diese Weise ineinandergreifende Teile verunmöglichen weitgehend einen Luftaustausch der isolierten Innenraums mit der Umgebung.

Die Wandstärke der erfindungsgemässen Teile beträgt beispielsweise etwa 3-4 cm oder sogar mehr. Auf diese Weise wird ein guter Dämmwert erreicht bei mässigem Material und Platzbedarf.

Die wichtigste Anwendung der Erfindung stellt das thermische Isolieren von Heizungsanlagen (Leitungssysteme, Ventile, Pumpen) dar.

Weitere vorteilhafte Merkmale der Erfindung ergeben sich aus der Detailbeschreibung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a, b: Eine schematische Darstellung der zusammenfügbaren Teile im Querschnitt und im Längsschnitt;
- Fig. 2: eine schematische perspektivische Darstellung der erfindungsgemässen Isolation;
- Fig. 3: eine schematische Darstellung eines erfindungsgemässen Klemmverschlusses;
- Fig. 4: eine schematische Darstellung eines Schnitts durch eine Rohrleitungsisolation aus rastend zusammenfügbaren Hälften;
- Fig. 5: eine schematische Darstellung der Seitenansicht einer Halbschale mit stirnseitig angeformten Formschlussmitteln;
- Fig. 6a, b: eine schematische Darstellung eines Schnitts durch schaftschlüssig verbindbare bzw. verbundene Isolationsteile;
- Fig. 7: ein weiteres Beispiel für eine kraftschlüssige stirnseitige Verbindung;
- Fig. 8: eine schematische Darstellung einer Ausführungsform mit ihm Querschnitt zickzackförmigen Fügungsflächen;
- Fig. 9: eine weitere Ausführungsform für den stirnseitigen Formschluss;
- Fig. 10: eine schematische Darstellung einer halbzylindrischen Rohrisolation im Achsenquerschnitt;
- Fig. 11a, b: eine schematische Darstellung eines Mantelteils für eine Rohrisolation mit rippenartigen Stützhilfen;
- Fig. 12: eine schematische perspektivische Darstellung zweier zusammenpassender Mantelteile für einen Rohrbogen.

Grundsätzlich sind in den Figuren gleiche Teile mit gleichen Bezugszeichen versehen.

### Wege zur Ausführung der Erfindung

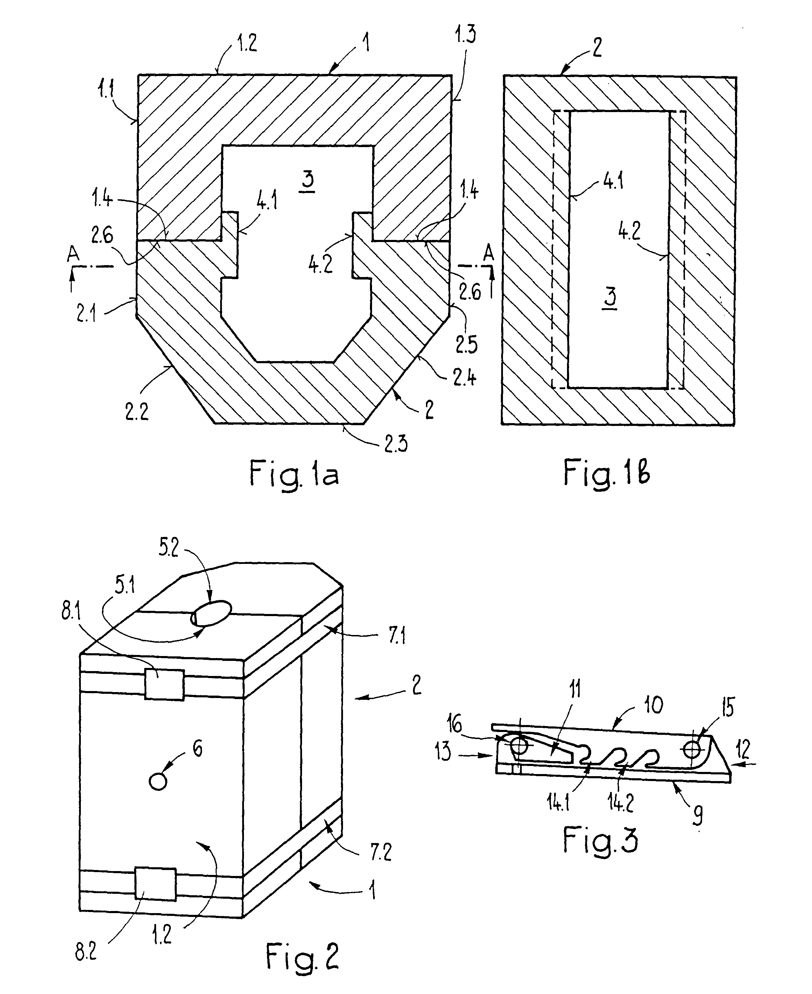

Fig. 1a zeigt eine erfindungsgemässe Isolation im Querschnitt. Sie besteht im wesentlichen aus zwei einstückigen Halbschalen 1 und 2, die aus wärmebeständigem expandiertem Polystyren gebildet sind. Die Halbschale 1 ist im Querschnitt U-profilförmig, d. h. sie hat drei senkrecht zueinander stehende Aussenflächen 1.1, 1.2, 1.3. Die Halbschale 2 ist dagegen C-förmig im Querschnitt. Sie weist jeweils im 45°-Winkel zueinander stehende Aussenflächen 2.1, ..., 2.5 auf.

Mit ihren Stirnseiten 1.4 resp. 2.6 liegen die beiden Halbschalen 1 und 2 dicht aneinander an, um einen gut isolierten Innenraum 3 einzuschliessen.

Am innenliegenden Rand der Stirnseite 2.6 sind zwei in Längsrichtung der Halbschale 2 laufende Führungslaschen 4.1, 4.2 angeformt. Sie gewährleisten, dass die beiden Halbschalen 1 und 2 im zusammengefügten Zustand relativ zueinander präzis positioniert sind.

Fig. 1b zeigt den in Fig. 1a angegebenen Längsschnitt A. Es ist deutlich zu erkennen, dass die Halbschale 2 (und natürlich in sinngemässer Weise die Halbschale 1) an ihrer offenen Seite länglich rechteckig ist. Die Führungslaschen 4.1, 4.2 sind durchgehende, sich über die ganze innenseitige Länge erstreckende Längsstreifen einer Dicke von z. B. 5 mm. Die Halbschalen 1 und 2 weisen ihrerseits vorzugsweise eine Wandstärke von etwa 4 cm auf. Die Aussenabmessungen der Halbschalen 1 und 2 liegen typischerweise im Bereich von 20-50 cm (wobei die Länge durchaus grösser sein kann).

Fig. 2 zeigt die Isolation in perspektivischer Darstellung. Die beiden Halbschalen 1 und 2 sind durch zwei Bänder 7.1, 7.2 miteinander verbunden. Verschlüsse 8.1, 8.2 ermöglichen ein einfaches Spannen der Bänder 7.1, 7.2 und eine allenfalls später erforderliche Demontage der Isolation. Um die Montage der Bänder 7.1, 7.2 zu erleichtern und deren Position festzulegen, können die Halbschalen 1 und 2 aussenseitig umlaufende Ausnehmungen bzw. Vertiefungen zur Plazierung der Bänder 7.1, 7.2 aufweisen.

Die eine von zwei Oeffnungen, welche für die nicht dargestellten, zur Installation führenden Heizungsrohre erforderlich sind, ist durch Ausnehmungen 5.1, 5.2 in den Stirnseiten 1.4, 2.6 dargestellt. (Die zweite Oeffnung befindet sich z. B. an der in der Darstellung gemäss Fig. 2 nicht sichtbaren Unterseite der Isolation.) Die beiden Ausnehmungen 5.1, 5.2 sind z. B. halbkreisförmig, um zusammen eine runde Oeffnung für ein (nicht dargestelltes) Heizungsrohr zu bilden.

Die beiden Verschlüsse 8.1, 8.2 sind so ausgebildet, dass sie nicht unbedingt an den Enden eines Bandes sitzen müssen. Sie weisen z. B. zwei Durchgänge mit Klemmelementen auf, die einzeln gelöst oder geschlossen werden können.

In der Mitte der Aussenfläche 1.2 ist z. B. eine Bohrung 6 für eine (nicht dargestellte) Achse eines Ventilstellrades vorgesehen.

Fig. 3 zeigt eine bevorzugte Ausführungsform des Verschlusses 8.1 bzw. 8.2. Ein länglicher Basisteil 9 weist zwei öffen- und schliessbare Klammern 10 und 11 auf, welche um die jeweils an den gegenüberliegenden längsseitigen Enden des Basisteils 9 angebrachten Achsen 15 bzw. 16 drehbar sind.

Die Klammern 10 und 11 sind keilförmig ausgebildet, d. h. sie verjüngen sich mit zunehmendem Abstand von der jeweiligen Achse 15 bzw. 16.

Die Klammer 10 ist etwa gleich lang wie der Basisteil 9. Sie überdeckt im zugeklappten Zustand die viel kürzere Klammer 11. Vorzugsweise ragt die Klammer 10 mit ihrem Ende etwas über den Basisteil 9 hinaus, so dass sie bei Bedarf leicht geöffnet werden kann. An ihrer dem Basisteil 9 zugewandten Innenseite sind z. B. zwei in Richtung des spitzen Endes der kleinen Klammer 11 gerichtete hakenförmige Zähne 14.1, 14.2 ausgebildet.

Wird die Klammer 11 geöffnet (resp. aufgeklappt), gibt sie einen Einführschlitz (zwischen Achse 16 und Basisteil 9) frei, in welchen ein Ende eines Bandes in Bandzuführrichtung 13 eingefädelt werden kann. Zum Fixieren des Bandes wird zunächst die kleine Klammer 11 geschlossen (wobei das Band zwischen Klammer 11 und Basisteil 9 eingeklemmt wird). Danach kann das andere Ende des Bandes, an welchem ein an den Zähnen 14.1, 14.2 einhängbarer Bügel angebracht ist, mit der grossen Klammer 10 gespannt werden.

Die in den Figuren gezeigte Isolation eignet sich ebensogut für Heizungsventile wie für Pumpen. Zur Einbettung einer Pumpe sind beispielsweise andere Oeffnungen bzw. Durchbrüche anzubringen als die in Fig. 2 gezeigten.

Da in Heizungsanlagen ohne weiteres Temperaturen bis 90 °C auftreten, können nicht irgendwelche Hartschaumstoffe verwendet werden. Aus der grossen Zahl von Schaumstoffen galt es im Rahmen der Erfindung einen zu ermitteln, der bei diesen Temperaturen nicht weich wird oder schmilzt. Nach beträchtlichen Untersuchungen hat sich gezeigt, dass das unter dem Namen "Caril" vertriebene expandierbare Polystyren unter der Beimengung von flammhemmendem Mittel sehr gute Ergebnisse liefert.

Die beschriebene Ausführungsform lässt sich in vielfältiger Weise abwandeln. Die innenseitig angebrachten, streifenförmigen Führungslaschen können durch andere vorspringende Teile ersetzt sein. Damit die Positionierung in beiden Richtungen der Trennungsebene der beiden Teile gewährleistet ist, genügt es im Prinzip, in den vier Ecken eines der Formteile Zapfen oder Laschen anzubringen. Grundsätzlich ist es auch möglich, Führungsmittel an der Aussenseite anzuformen. Schliesslich ist sogar eine geeignete komplementäre Stufung der Stirnflächen denkbar.

Die ganze Isolation kann im Unterschied zu dem in den Figuren gezeigten Beispiel durch zwei gleiche quaderförmige bzw. U-profilförmige Teile gebildet werden.

Mit dem erfindungsgemässen Material lassen sich auch formschlüssig zusammenfügbare Teile zur Erstellung einer Leitungsisolation herstellen.

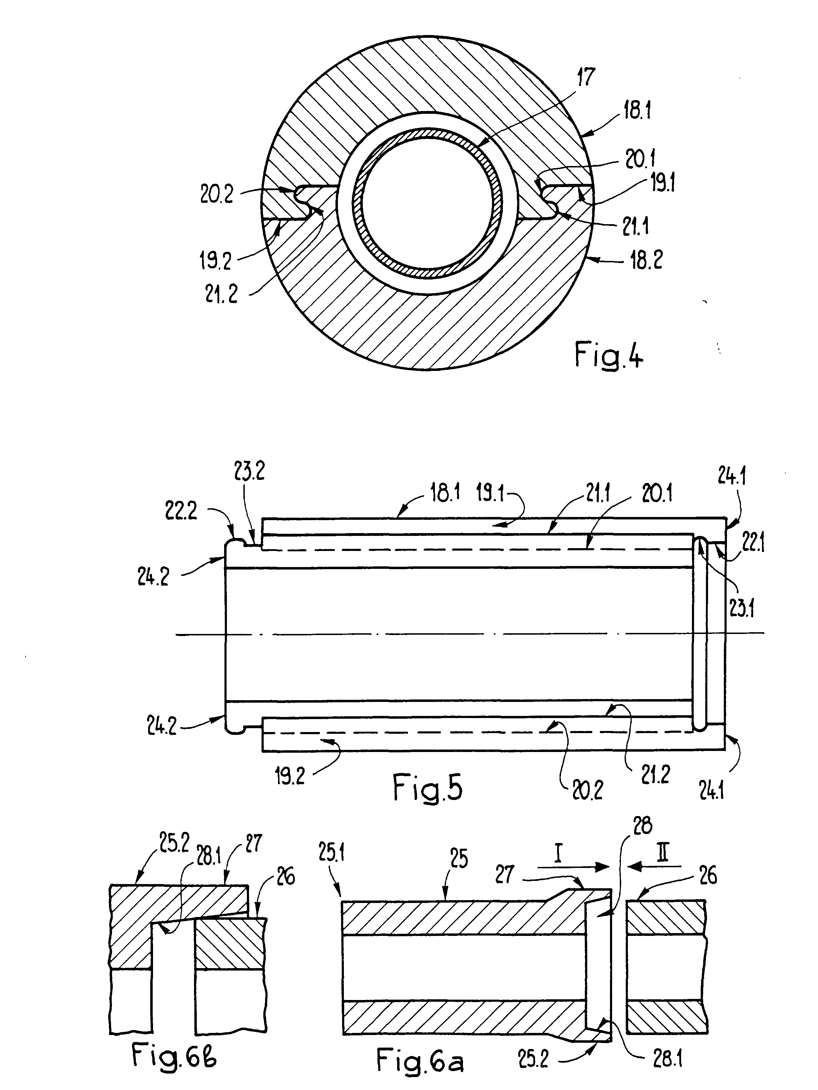

Fig. 4 zeigt schematisch ein Leitungsrohr 17 einer Heizungsinstallation, welches gemäss einer bevorzugten Ausführungsform mit zwei zusammenfügbaren Halbschalen 18.1, 18.2 isoliert ist. Diese sind vorzugsweise im Querschnitt identisch ausgebildet. Im folgenden wird deshalb nur die eine der beiden Halbschalen 18.1, 18.2 im Detail erläutert.

Die Halbschale 18.1 weist zwei längsseitige Anschlussflächen 19.1, 19.2 auf, an welchen in Achsenlängsrichtung verlaufende Rillen 20.1, 20.2 und Rippen 21.1, 21.2 ausgebildet sind. Im Querschnitt betrachtet weisen die Anschlussflächen 19.1, 19.2 eine S-Form auf. (In Fig. 4 bildet z. B. die Rippe 21 den unteren Halbbogen und die Rille 20 den oberen Halbbogen der S-Form.) Rippen und Rillen 21.1, 21.2 resp. 20.1, 20.2 sind formmässig aufeinander abgestimmt, so dass - wie in Fig. 4 gezeigt - zwei identische Halbschalen 18.1, 18.2 rastend zusammengefügt werden können. Die Rastwirkung muss dabei gerade etwa so gross sein, dass die Halbschalen 18.1, 18.2 in jeder räumlichen Lage zusammengehalten werden können.

Fig. 5 zeigt die Halbschale 18.1 von der Seite, wobei der Betrachter in die Schalenwölbung hineinschaut.

Die Rillen 20.1, 20.2 und Rippen 21.1, 21.2 erstrecken sich vorzugsweise über die ganze Länge der Anschlussflächen 19.1, 19.2.

Gemäss einer besonders bevorzugten Ausführungsform weist die Halbschale 18.1 zudem an ihren stirnseitigen Anschlussflächen 24.1, 24.2 Ausnehmungen bzw. Abstufungen mit ringförmig umlaufenden Rippen 22.1, 22.2 und Rillen 23.1, 23.2 auf zur Bildung eines axialen Formschlusses mit einer anschliessenden, identisch ausgebildeten Halbschale. Die Rippen und Rillen 22.1, 22.2 resp. 23.1, 23.2 zeigen am einen Ende (hier bei der Anschlussfläche 24.1) radial nach innen und beim anderen Ende (hier bei der Anschlussfläche 24.2) radial nach aussen. Sinngemäss zum radialen Formschluss gemäss Fig. 4 können die Rippen und Rillen 22.1, 22.2 resp. 23.1, 23.2 im Querschnitt eine symmetrische S-Form für den axialen Formschluss bilden (wobei die "Längsachse" der S-Form parallel zur Längsachse der Halbschale 18.1 ist).

Halbschalen der beschriebenen Art lassen sich zu einer Leitungsisolation beliebiger Länge zusammenstecken. Es werden dazu nur die aus formgepresstem Polystyren bestehenden Teile benötigt. Auf Aussenschalen, Drahtbefestigungen u. dgl. kann verzichtet werden. Besonders vorteilhaft ist es natürlich, wenn die anhand der Fig. 1a, b und 2 erläuterten Ventilhüllschalen stirnseitig für die beschriebene formschlüssige Verbindung mit Rohrhalbschalen ausgebildet sind.

Der Formschluss kann natürlich nicht nur in der beschriebenen Weise realisiert werden. Anstelle S-förmiger Rippen-Rillen-Konstruktionen können Z-förmige oder in anderer Weise verhakende Konstruktionen verwendet werden.

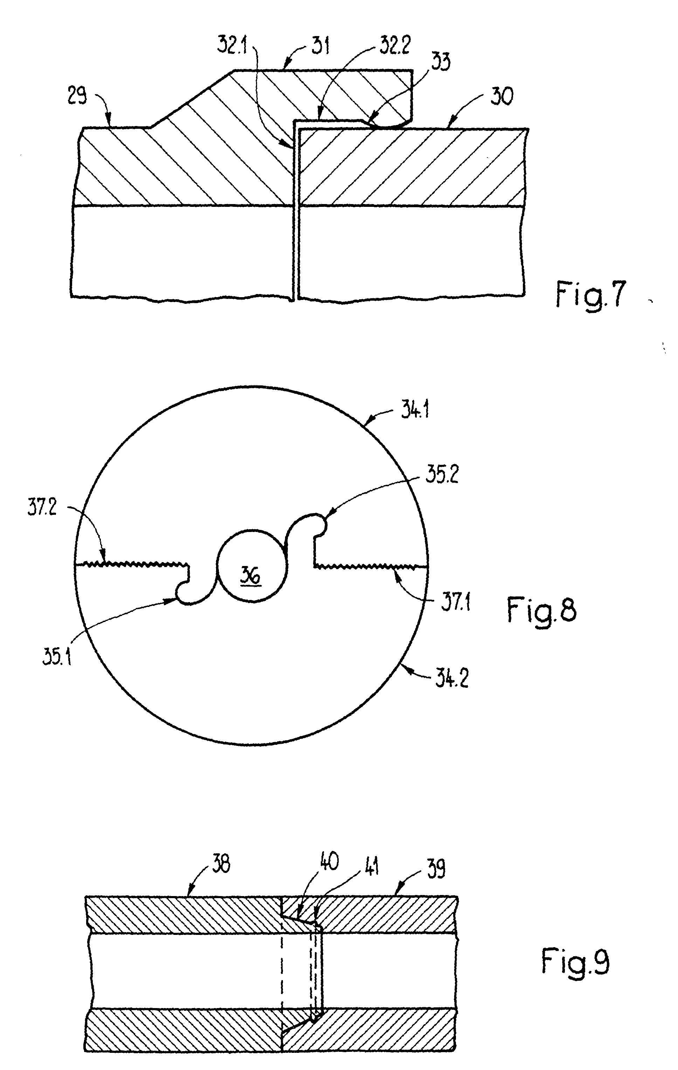

Anstelle eines endseitigen Formschlusses kann auch ein endseitiger Kraftschluss verwirklicht werden. Ein solcher ist prinzipienhaft in den Fig. 6a, b gezeigt. Ein Isolationsrohr 25 ist am einen Ende 25.1 unbearbeitet (d. h. nur entsprechend dem zylindrischen Isolationsquerschnitt ausgeführt) und ist am anderen Ende 25.2 mit einer erfindungsgemäss gestalteten Verbreiterung 27 versehen. Die Verbreiterung 27 weist innenseitig eine Ausnehmung 28 mit einer gegen das Ende 25.2 sich konisch ausweitenden, rotationssymmetrischen Innenmantelfläche 28.1 auf. Der mittlere Innendurchmesser der Innenmantelfläche 28.1 entspricht gerade etwa dem Aussendurchmesser des unbearbeiteten Endes 25.1 und die Abweichung zu einer zylindrischen Form beträgt weniger Winkelgrade (z. B. 1-5°). Wie die Pfeile I und II veranschaulichen, kann ein unbearbeitetes Ende 26 eines axial anschliessenden Isolationsrohrs 25 in die Ausnehmung 28 so stark hineingeschoben werden, dass sich die beiden Enden verklemmen (Fig. 6b).

Da das Isolationsrohr 25 nur an einem Ende 25.2 eine spezifische Form aufweist, kann es bei Bedarf am anderen Ende 25.2 verkürzt (abgesägt) werden, ohne dass die Möglichkeit zum kraftförmigen Zusammenfügen axial aneinanderschliessender Isolationsrohre verloren geht.

Fig. 7 veranschaulicht eine weitere Variante zum kraftschlüssigen Verbinden von zwei Enden 29, 30. Wiederum ist nur das eine Ende 29 mit einem spezifischen Ringfortsatz 31 ausgestattet, während das andere Ende 30 den ganz gewöhnlichen Isolationsrohrquerschnitt aufweist.

Der Ringfortsatz 31 ist mit einer stufenartigen Ausnehmunggebildet durch eine senkrecht zur Längsachse des Isolationsrohrs stehende Anschlagfläche 32.1 und eine zylindrische Fläche 32.2 - ausgestattet. Der Radius der zylindrischen Fläche 32.2 ist etwas grösser als der Aussenradius des (zylindrischen) Endes 30. Am äussersten Ende weist die Fläche 32.2 eine umlaufende Rippe 33 zum Festklemmen des Endes 30 auf. Der Ringfortsatz 31 kann also, wie in Fig. 7 deutlich zu erkennen ist, über das unbearbeitete zylindrische Ende 30 des anschliessenden Isolationsrohres geschoben werden.

Die prinzipienhaft gezeigten Ausführungsformen der Fig. 6a, b und 7 lassen sich in verschiedener Weise abwandeln. Anstelle eines aussenseitig übergreifenden kann ein innenseitig eingreifender Ringfortsatz vorgesehen sein. Weiter kann der Ringfortsatz durch mehrere entsprechende Einzelfortsätze ersetzt werden.

Formschlussmittel gemäss den Fig. 4 und 5 können mit Kraftschlussmitteln gemäss den Fig. 6a, b und 7 gemischt werden. Für das radiale Zusammenfügen kann z. B. ein Formschluss und für das axiale ein Kraftschluss vorgesehen sein.

U. U. ist es einfacher, anstelle von einteilig angeformten Verbindungskonstruktionen eine Heftklammerverbindung der einzelnen Teile zu wählen. Dies bedeutet, dass die einzelnen Teile rohr- bzw. halbrohrförmig ausgebildet sind und dadurch verbunden werden, dass mit an sich bekannten Heftklammerpistolen Metallklammern eingeschossen bzw. eingeschlagen werden.

Zum Isolieren von Heizungsanlagen wird vorzugsweise ein ganzes Set unterschiedlicher Teile bereitgestellt. Neben geraden Rohrhalbschalen sind dabei insbesondere Halbschalen für gekrümmte Leitungen und für T-Verzweigungen vorzusehen. Weiter wird es erforderlich sein, Halbschalen verschiedener Länge bereitzustellen.

Da der Aufwand für die Herstellung von Formteilen aus dem besonders bevorzugten Material "Caril" ziemlich aufwendig ist, und Heizungsinstallationen in ihrer Ausführung nicht genormt sind, kann es vorteilhaft sein, zur Beibehaltung einer konstruktiven Variabilität Isolationsrohre mit Sollbruchstellen zu schaffen. Dies soll im folgenden kurz erläutert werden.

Fig. 8 zeigt eine weitere bevorzugte Ausführungsform der Erfindung. Zwei halbrohrartige Teile 34.1, 34.2 weisen je ein nahe beim isolierten Innenraum 36 ausgebildetes Hakenelement 35.1 resp. 35.2 auf. An den einander zugewandten und einander berührenden Fugenflächen ist gemäss einer besonders bevorzugten Ausführungsform eine (im Querschnitt zickzackförmige) Rillenstruktur 37.1, 37.2 ausgebildet. Die beiden Teile 34.1, 34.2 sind auf diese Weise eng verzahnt und lassen keine warme Luft aus dem Innenraum 36 nach aussen.

Fig. 9 zeigt eine weitere stirnseitige Verbindungsvariante. Ein erstes Isolationsrohr 38 weist an seiner Stirnseite einen konischen Ansatz 40 mit gegenüber dem Rohrquerschnitt reduzierten max. Aussendurchmesser auf. In der Nähe seines Endes weist der Ansatz 40 eine umlaufende Rippe 41 auf. Ein zweites Isolationsrohr 39 weist eine entsprechende negative Form auf (d. h. eine konische Ausnehmung mit einer umlaufenden Rille). Die beiden Isolationsrohre 38 und 39 können formschlüssig zusammengesteckt werden. An der Verbindungsstelle ist dabei keine Querschnittsverbreiterung erforderlich.

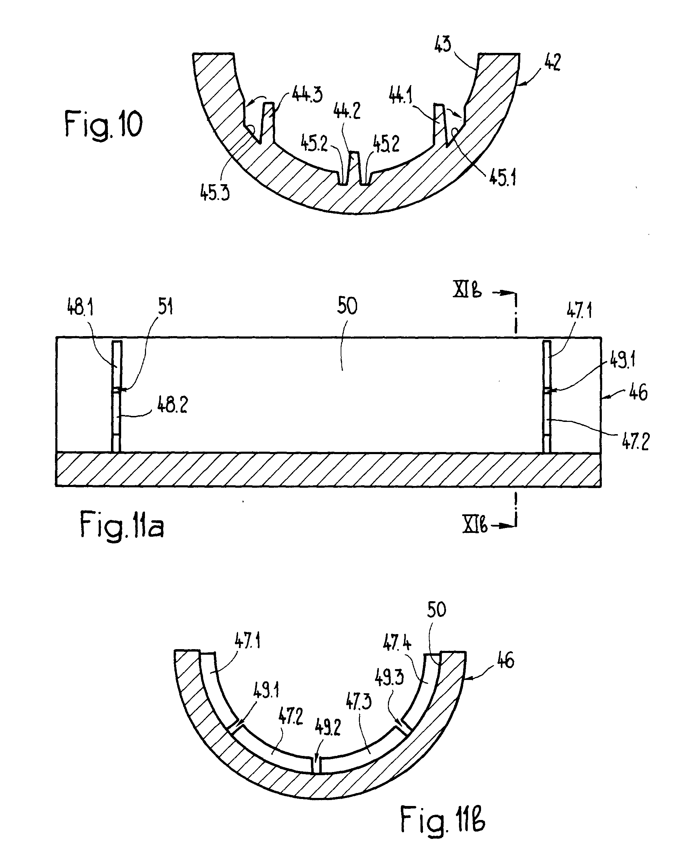

Fig. 10 zeigt einen halbzylindrischen Mantelteil 42, der an seiner Innenseite 43 eine Mehrzahl von vorstehenden Zapfen 44.1, ..., 44.3 aufweist. Im vorliegenden Beispiel sind die Zapfen 44.1, ..., 44.3 alle im wesentlichen parallel zueinander, wobei der mittlere Zapfen 44.2 zudem in radialer Richtung aus der Innenseite 43 herausragt. Die Zapfen 44.1, ..., 44.3 sind z. B. 3-10 mm lang. Gemäss der Erfindung sind sie deformierbar. Je nach Aussendurchmesser des zu isolierenden Leitungsrohres werden die Zapfen 44.1, ..., 44.3 mehr oder weniger zusammengestaucht resp. deformiert. Sie stützen somit den Mantelteil 42 an der Installation ab. Bei einer aus zwei Halbschalen gemäss Fig. 10 bestehenden Isolation wird infolgedessen die Isolation koaxial zum Leitungsrohr gehalten. Bei einer Zapfenlänge von z. B. 10 mm kann mit demselben Typ Mantelteil ein Leitungsrohrdurchmesserbereich von z. B. 60-80 mm bedient werden.

Gemäss einer bevorzugten Ausführungsform der Erfindung ist jedem Zapfen 44.1, ..., 44.3 eine Aussparung resp. Vertiefung 45.1, ..., 45.3 zugeordnet. Wird ein grosses Rohr in den Mantelteil 42 eingelegt, dann können sich die Zapfen 44.1, ..., 44.3 in diese Vertiefungen 45.1, ..., 45.3 zurückziehen. Die Vertiefungen 45.1, ..., 45.3 müssen nicht sehr gross sein (z. B. 1-3 mm tief).

Die Zapfen 44.1, ..., 44.3 haben z. B. einen Durchmesser von 1-3 mm. Sie können zylindrisch oder konisch sein. Insbesondere ist auch denkbar, dass sie alle radial gegen die Längsmittelachse des Mantelteils 42 (resp. des einzulegenden Leitungsrohrs) stehen.

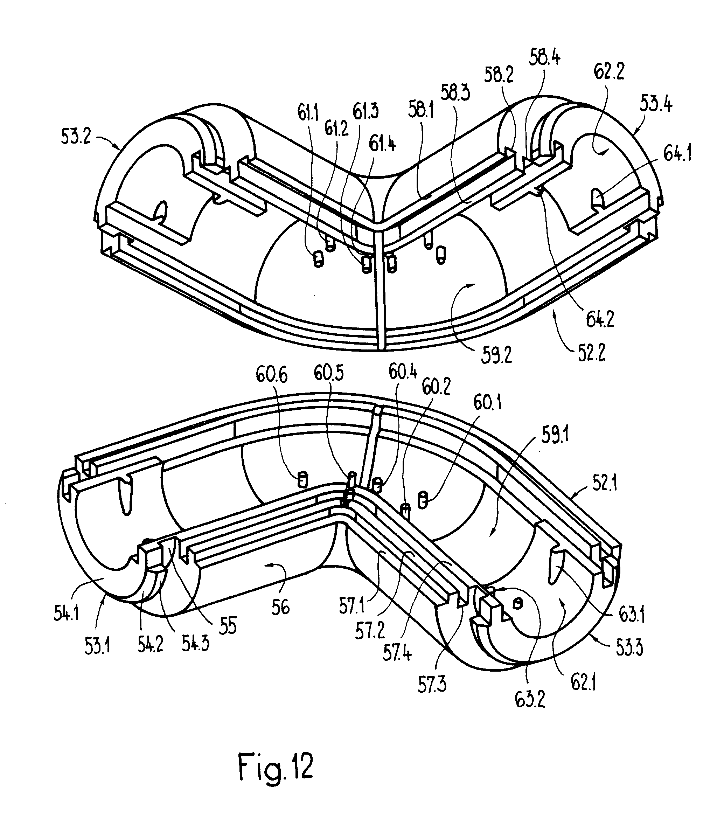

Fig. 11a, b zeigt eine weitere bevorzugte Ausführungsform eines halbzylindrischen Mantelteils 46. In der Nähe der Enden sind eine Mehrzahl von Rippen 47.1, ..., 47.4 und 48.1, 48.2 als Stützhilfen vorgesehen. Sie ragen aus der Innenseite 50 des Mantelteils 46 heraus und stehen senkrecht zur Längsachse des Mantelteils 46. Die Rippen 47.1, ..., 47.4 und 48.1, 48.2 sind typischerweise kreisringförmig und durch schmale Spalte 49.1, 49.2, 49.3 und 51 getrennt. Die Rippen 47.1, ..., 47.4, 48.1, 48.2 sind in der Art dünner hoher Wändchen ausgebildet, damit sie ohne Probleme in erforderlichem Mass deformiert resp. zur Seite gedrückt werden können.

Wird eine Isolation aus einer Mehrzahl von auf einer Achse hintereinander angeordneten Mantelteilen 46 erstellt, dann wird der ringförmige Luftzwischenraum zwischen Leitungsrohr und hülsenartiger Isolation durch die Rippen 47.1, ..., 47.4 resp. 48.1, 48.2 etc. in mehrere konvektionsmässig getrennte Längsabschnitte aufgeteilt. Dies hat den Vorteil, dass bei einer Undichtigkeit in der erstellten Isolation (z. B. zwischen stirnseitig aneinandergrenzenden Mantelteilen) der Wärmeverlust begrenzt ist.

Aus den Fig. 11a, b ist erkennbar, dass den Rippen 47.1, ..., 47.4, 48.1, 48.2 keine Vertiefungen bzw. Wandausnehmungen zugeordnet sind. Selbstverständlich können die anhand der Fig. 10 erläuterten Ausnehmungen auch bei den rippenartigen Stützhilfen gemäss Fig. 11a, b vorgesehen sein. Umgekehrt kann bei der Ausführungsform gemäss Fig. 10 auf die Vertiefungen 45.1, ..., 45.3 verzichtet werden.

Fig. 12 zeigt zwei zusammenfügbare Halbschalen 52.1, 52.2 zum Isolieren eines Rohrknies. An jedem Ende der Halbschalen 52.1, 52.2 befindet sich ein Kupplungsanschluss 53.1, ..., 53.4 der nachfolgend beschriebenen Art. Ein flanschartiger Teil wird durch eine stirnseitige Fläche 54.1, eine (z. B. im 45°-Winkel) abgeschrägte Fläche 54.2 und eine mantelseitige bzw. radiale Fläche 54.3 gebildet. Der durch die Fläche 54.3 definierte Radius ist kleiner als der durch eine Aussenfläche 56 der Halbschale 52.1 gebildete Radius. Auf die Fläche 54.3 folgt eine ringnutartige Vertiefung 55. An diese schliesst der dickwandige Teil der Halbschale 52.1 an.

Die Kupplungsanschlüsse 53.1, 53.2 haben - bei zusammengefügten Halbschalen 52.1, 52.2 - eine rotationssymmetrische Aussenform. Gemäss der Erfindung wird an den Kupplungsanschluss 53.1, 53.2 eine (nicht dargestellte) zylindrische (ebenfalls aus zwei Halbschalen zusammengesetzte) Isolationshülse angeschlossen, welche komplementär zu den Kupplungsanschlüssen 53.1, 53.2 ausgebildet ist. Die stirnseitig anzuschliessende Isolationshülse weist also eine innenseitige Ringnut auf, in welche der Kupplungsanschluss 53.1, 53.2 eingreifen kann, um eine zugfeste formschlüssige Verbindung zu gewährleisten.

Um die beiden Halbschalen 52.1, 52.2 einfach und präzise zusammenfügen zu können, sind an den Längsstirnflächen stufenförmig gegeneinander versetzte Flächen 57.1, ..., 57.4 resp. 58.1, ..., 58.4 vorgesehen. Im vorliegenden Beispiel bilden an der Halbschale 52.1 die Flächen 57.2, 57.4 zwei Rippen, die in die durch die Flächen 58.2, 58.4 gebildeten Rinnen der zweiten Halbschale 52.2 hineinpassen. Umgekehrt bildet die Fläche 58.3 eine Rippe, die in die durch die Fläche 57.3 gebildete Rinne hineinpasst. Zu beachten ist, dass gemäss einer bevorzugten Ausführungsform die Fläche 57.3 tiefer liegt als die Fläche 57.1 (und korrespondierenderweise die Fläche 58.3 stärker vorsteht als die Fläche 58.1).

Die beiden Halbschalen 52.1, 52.2 lassen sich also wie Passformen zusammenfügen.

Die Innenflächen 59.1, 59.2 der Halbschalen 52.1 resp. 52.2 sind - soweit nicht der knieförmig gebogene Abschnitt betroffen ist - als Zylinderflächen ausgeführt. Im zusammengefügten Zustand schliessen die beiden Halbschalen 52.1, 52.2 somit einen im Querschnitt kreisförmigen Innenraum ein.

An den Innenflächen 59.1, 59.2 sind gemäss der Erfindung kleine Zapfen 60.1, ..., 60.6 resp. 61.1, ..., 61.4 etc. ausgebildet. Sie sind z. B. wie im Zusammenhang mit Fig. 10 beschrieben ausgeführt (d. h. klein und elastisch.) Im Endresp. Anschlussbereich der Halbschalen 52.1, 52.2 sind Innenflächen 62.1, 62.2 mit reduziertem Innenradius vorgesehen. Sie weisen gemäss einer bevorzugten Ausführungsform seitliche Rippen 63.1, 63.2 resp. 64.1, 64.2 auf. Im vorliegenden Beispiel sind die genannten Rippen 63.1, 63.2, 64.1, 64.2 so ausgeführt und angeordnet, dass bei zusammengefügten Halbschalen 52.1, 52.2 die Rippen 63.1 und 64.1 resp. 63.2 und 64.2 jeweils als eine Rippe erscheinen. Es ist ersichtlich, dass die Rippen 63.1, 63.2 resp. 64.1, 64.2 einer Halbschale 52.1 resp. 52.2 spiegelbildlich (bezüglich einer "Längsmittelebene" der Halbschale 52.1 resp. 52.2) angeordnet und ausgebildet sind.

Die Zapfen 60.1, ..., 60.6 resp. 61.1, ..., 61.4 etc. sind im Kniebereich der beiden Halbschalen 52.1 resp. 52.2 und in der Nähe der Längsmittellinie der Innenflächen 59.1, 59.2 plaziert.

Es ist klar, dass die erfindungsgemässen Zapfen bzw. Stützhilfen nicht nur bei Isolationen für Rohrleitungen angewendet werden können. Sie sind nämlich auch dazu geeignet, schalenförmige Isolationshüllen bezüglich irgendwelcher Geräte oder Installationen (Pumpen, Ventile u. dgl.) korrekt zu positionieren. Es ist dabei zu beachten, dass die Stützmittel mit relativ geringem Kraftaufwand deformiert werden können und dass die kraft- oder formschlüssige Verbindung zwischen den Mantelteilen genügend gross ist, um die Isolation (gegen den durch die Stützhilfen bedingten gegen aussen wirkenden "Expansionsdruck") zusammenzuhalten.

Zur Erhöhung der Brandklassierung der Mantelteile können sie aussenseitig mit einem dünnen schützenden Mantel versehen sein. Vorzugsweise wird z. B. eine Folie aufgezogen. Diese kann aus PVC bestehen. Denkbar ist auch eine Metallfolie (Aluminiumfolie). Eine bevorzugte Variante besteht darin, den Mantel durch Aufspritzen eines geeigneten Materials (z. B. Aluminium) anzubringen. So lässt sich das Verhalten eines z. B. aus expandierbarem Polystyrol bestehenden Mantelteils bei Brand verbessern.

Zusammenfassend ist festzuhalten, dass durch die Erfindung eine besonders einfache Möglichkeit zur effizienten Isolierung von Heizungsinstallationen, namentlich von kleinen Komponenten wie Ventilen oder Pumpen geschaffen worden ist.

## Patentansprüche

1. Mantelteil (52.1, 52.2) zum Erstellen einer aus mehreren Mantelteilen (52.1 und 52.2) zusammengesetzten thermischen Isolation für Geräte und Installationen, dadurch gekennzeichnet, dass innenseitig des Mantelteils (52.1, 52.2) flexible Stützhilfen (60.1, ..., 60.6, 63.1, 63.2; 61.1, ..., 61.4, 64.1, 64.2) ausgebildet sind, derart, dass die zusammengesetzte Isolation Halt an den Geräten bzw. Installationen unabhängig von den genauen Aussenabmessungen der genannten Geräte und Installationen hat und dass den Stützhilfen (44.1, 44.2, 44.3) Wandvertiefungen (45.1, 45.2, 45.3) zugeordnet sind, um einen seitlichen Freiraum zur Verfügung zu stellen, in welchen die Stützhilfen (44.1, 44.2, 44.3) bei Deformation ausweichen können.

2. Mantelteil nach Anspruch 1, dadurch gekennzeichnet, dass er einstückig ist und dass die Stützhilfen (60.1,..., 60.6, 63.1, 63.2) als integrale Bestandteile an einer Innenwandung (59.1) angeformt sind.

3. Mantelteil nach Anspruch 1 oder 2, dadurch gekennzeichnet, dass die Stützhilfen eine Mehrzahl von deformierbaren, insbesondere stauchbaren Zapfen (60.1,..., 60.6, 61.1, ..., 61.4) umfassen.

4. Mantelteil nach einem der Ansprüche 1 bis 3, dadurch gekennzeichnet, dass die Stützhilfen (47.1, ..., 47.4; 63.1, 63.2, 64.1, 64.2) als Rippen ausgebildet sind.

5. Mantelteil nach einem der Ansprüche 1 bis 4, dadurch gekennzeichnet, dass er (18.1, 18.2) angeformte Verbindungsmittel (20.1, 20.2, 21.1, 21.2, 22.1, 22.2, 23.1, 23.2) zum formschlüssigen Verbinden mit einem weiteren Mantelteil aufweist.

6. Mantelteil nach einem der Ansprüche 1 bis 5, dadurch gekennzeichnet, dass er als Rohrhalbschale (18.1, 18.2) ausgebildet ist zum Isolieren von Leitungsrohren (17).

7. Mantelteil nach Anspruch 5 oder 6, dadurch gekennzeichnet, dass an stirnseitigen (24.1, 24.2) und/oder an längsseitigen (19.1,19.2) Anschlussflächen Verbindungsmittel (20.1, 20.2, 21.1, 21.2, 22.1, 22.2, 23.1, 23.2) angeformt sind.

8. Mantelteil nach einem der Ansprüche 5 bis 7, dadurch gekennzeichnet, dass die Verbindungsmittel durch eine rastende oder kraftschlüssige Rippen-Rillen-Konstruktion gebildet sind (20.1, 20.2, 21.1, 21.2).

9. Mantelteil nach einem der Ansprüche 7 oder 8, dadurch gekennzeichnet, dass an einem stirnseitigen Ende (25.2, 31) Mittel (27, 28.1; 31, 32.2, 33) zum kraftschlüssigen Festhalten eines unbearbeiteten stirnseitigen Endes (26; 30) eines weiteren Mantelteils angeformt sind.

10. Mantelteil nach einem der Ansprüche 7 bis 9, dadurch gekennzeichnet, dass Anschlussflächen mit einer im Querschnitt zickzackartigen Rillenstruktur (37.1, 37.2) vorgesehen sind.

11. Isolation für Installationen wie Rohrleitungsabschnitte, Ventile, Pumpen und dergleichen, aus mehreren zusammenfügbaren Mantelteilen, dadurch gekennzeichnet, dass die Mantelteile (52.1, 52.2) je einstückig aus wärmebeständigem expandiertem Polystyrol gebildet sind, dass innenseitig der Mantelteile (52.1, 52.2) flexible Stützhilfen (60.1, ..., 60.6, 63.1, 63.2; 61.1, ..., 61.4, 64.1, 64.2) ausgebildet sind, derart, dass die zusammengesetzte Isolation Halt an den Geräten bzw. Installationen unabhängig von den genauen Aussenabmessungen der genannten Geräte und Installationen hat und dass den Stützhilfen (44.1, 44.2, 44.3) Wandvertiefungen (45.1, 45.2, 45.3) zugeordnet sind, um einen seitlichen Freiraum zur Verfügung zu stellen, in welchen die Stützhilfen (44.1, 44.2, 44.3) bei Deformation ausweichen können.

12. Isolation nach Anspruch 11, dadurch gekennzeichnet, dass sie aus genau zwei Mantelteilen (1, 2) besteht, wobei der eine im Querschnitt U-profilförmig und der andere C-profilförmig ist, und dass die zwei Mantelteile (1, 2) mit ihren jeweils offenen Seiten dimensionsmässig aufeinander abgestimmt sind.

13. Isolation nach einem der Ansprüche 11 oder 12, dadurch gekennzeichnet, dass die Mantelteile (1, 2) Stirnseiten (1.4, 2.6) mit halbkreisförmigen Ausnehmungen (5.1, 5.2) zur Bildung von für zu- bzw. wegführende Leitungen erforderliche Oeffnungen aufweisen.

14. Isolation nach einem der Ansprüche 11 bis 13, dadurch gekennzeichnet, dass mindestens einer der Mantelteile (2) stirnseitig Führungsmittel (4.1, 4.2) aufweist.

15. Isolation nach einem der Ansprüche 11 bis 14, dadurch gekennzeichnet, dass die Mantelteile (1, 2) verhakungsfrei zusammenfügbar sind.

16. Isolation nach einem der Ansprüche 11 bis 15, dadurch gekennzeichnet, dass mindestens ein Band (7.1, 7.2) und mindestens ein Klemmverschluss (8.1, 8.2) zum Zusammenbinden der Mantelteile (1, 2) vorgesehen sind.

17. Isolation nach einem der Ansprüche 11 bis 16, dadurch gekennzeichnet, dass der eine Mantelteil (1) eine Bohrung (6) als Oeffnung für den Durchtritt einer Ventilstellradachse aufweist.

18. Isolation nach einem der Ansprüche 11 bis 17, dadurch gekennzeichnet, dass die Mantelteile (1, 2) eine Wandstärke von mindestens 3 cm, vorzugsweise 4 cm haben.

19. Isolation nach einem der Ansprüche 11 bis 18, dadurch gekennzeichnet, dass dem expandierten Polystyrol ein flammhemmendes Mittel beigemischt ist.

## Claims

1. Sheathing member (52.1, 52.2) for constructing thermal insulation, composed of several sheathing members (52.1 and 52.2), for apparatus and installations, characterised in that flexible support aids (60.1, ..., 60.6, 63.1, 63.2; 61.1, ..., 61.4, 64.1, 64.2) are formed on the inside of the sheathing member (52.1, 52.2) in such a manner that the assembled insulation has a hold on the apparatus or installations regardless of the exact outside dimensions of the said apparatus and installations and in that wall depressions (45.1, 45.2, 45,3) are associated with the support aids (44.1, 44.2, 44.3) in order to make available a lateral free space into which the support aids (44.1, 44.2, 44.3) can withdraw when deformation occurs.

2. Sheathing member according to claim 1, characterised in that it is in one piece and in that the support aids (60.1, ..., 60.6, 63.1, 63.2) are formed on an inner wall (59,1) as integral components.

3. Sheathing member according to claim 1 or 2, characterised in that the support aids include a plurality of deformable, especially upsettable, pegs (60.1, ..., 60.6, 61.1, ..., 61.4).

4. Sheathing member according to any one of claims 1 to 3, characterised in that the support aids (47.1, ..., 47.4; 63.1, 63.2, 64.1, 64.2) are in the form of ribs.

5. Sheathing member according to any one of claims 1 to 4, characterised in that it (18.1, 18.2) has integrally formed connecting means (20.1, 20.2, 21.1, 21.2, 22.1, 22.2, 23.1, 23.2) for positive-locking connection to a further sheathing member.

6. Sheathing member according to any one of claims 1 to 5, characterised in that it is in the form of a pipe half-shell (18.1, 18.2) for insulating supply pipes (17).

7. Sheathing member according to claim 5 or 6, characterised in that connecting means (20.1, 20.2, 21.1, 21.2, 22.1, 22.2, 23.1, 23.2) are integrally formed on connecting faces located on the ends (24.1, 24.2) and/or on thc longitudinal sides (19.1, 19.2).

8. Sheathing member according to any one of claims 5 to 7, characterised in that the connecting means are formed by a latching or non-positive-locking rib-groove construction (20.1, 20.2, 21.1, 21.2).

9. Sheathing member according to either claim 7 or claim 8, characterised in that means (27, 28.1; 31, 32.2, 33) for securing in a non-positive-locking mannor a non-machined end (26; 30) of a further sheathing member are integrally formed on an end (25.2, 31).

10. Sheathing member according to any one of claims 7 to 9, characterised in that connecting faces having a groove structure (37.1, 37.2) which is zigzag-like in cross-section are provided.

11. Insulation for installations such as pipelinc portions, valves, pumps and the like, comprising several sheathing members that can be joined together, characterised in that the sheathing members (52.1, 52.2) are each formed in one piece from heat-resistant expanded polystyrene, in that flexible support aids (60.1, ..., 60.6. 63.1. 63.2; 61.1, ..., 61.4, 64.1, 64.2) are formed on the inside of the sheathing members (52.1, 52.2) in such a manner that the assembled insulation has a hold on the apparacus or installations regardless of the exact outside dimensions of the said apparatus and installations and in that wall depressions (45.1, 45.2, 45.3) are associated with the support aids (44.1, 44.2, 44.3) in order to make available a lateral free space into which the support aids (44.1, 44.2, 44.3) can withdraw when deformation occurs.

12. Insulation according to claim 11, characterised in that it comprises exactly two sheathing members (1, 2), one having a U-profile shape in cross-section and the other a C-profile shape, and in that, with their respective open sides, the two sheathing members (1, 2) are matched to one another in terms of dimensions.

13. Insulation according to either claim 11 or claim 12, Characterised in that the sheathing members (1, 2) have end faces (1.4, 2.6) having semi-circular recesses (5.1, 5.2) to form openings necessary for incoming and outgoing lines.

14. Insulation according to any one of claims 11 to 13, characterised in that at least one of the sheathing members (2) has guide means (4.1, 4.2) on its end face.

15. Insulation according to any one of claims 11 to 14, characterised in that the sheathing members (1, 2) can be joined together without hooking.

16. Insulation according to any one of claims 11 to 15, characterised in that at least one strip (7.1, 7.2) and at least one clamping closure member (8.1, 8.2) are provided to bind together the sheathing members (1, 2).

17. Insulation according to any one of claims 11 to 16, characterised in that the one sheathing member (1) has a drilled hole (6) as an opening for the passage of a valve adjusting wheel shaft.

18. Insulation according to any one of claims 11 to 17, characterised in that the sheathing members (1, 2) have a wall thickness of at least 3 cm, preferably 4 cm.

19. Insulation according to any one of claims 11 to 19, characterised in that a flame-retarding agent is admixed with the expanded polystyrene.

## Revendications

1. Elément d'enveloppe (52.1, 52.2) pour la réalisation d'un système d'isolation thermique, formé par assemblage de plusieurs éléments d'enveloppe (52.1 et 52.2), pour des appareils et des installations, caractérisé en ce que des systèmes auxiliaires flexibles de support (60.1, ..., 60.6, 63.1, 63.2; 61.1, ..., 61.4, 64.1, 64.2) sont formés sur le côté intérieur de l'élément enveloppe (52.1, 52.2) de telle sorte que le système d'isolation assemblé est retenu sur les appareils ou les installations indépendamment des dimensions extérieures précises desdits appareils ou desdites installations et que des renfoncements de paroi (45.1, 45.2, 45.3) sont associés au système auxiliaire de support (44.1, 44.2, 44.3) de manière à fournir un espace latéral, dans lequel les systèmes auxiliaires de support (44.1, 44.2, 44.3) peuvent s'écarter par déformation.

2. Elément d'enveloppe selon la revendication 1, caractérisé en ce qu'il est agencé d'un seul tenant et que les éléments auxiliaires de support (60.1, ..., 60.6, 63.1, 63.2) sont formés sous la forme de composants intégraux sur une paroi intérieure (59.1).

3. Elément d'enveloppe selon la revendication 1 ou 2, caractérisé en ce que les éléments auxiliaires de support comprennent une multiplicité de tétons (60.1, ..., 60.6, 61.1, ..., 61.4) qui sont déformables et notamment peuvent être refoulés.

4. Elément d'enveloppe selon l'une des revendications 1 à 3, caractérisé en ce que les éléments auxiliaires de support (47.1, ..., 47.4; 63.1, 63.2, 64.1, 64.2) sont agencés sous la forme de nervures.

5. Elément d'enveloppe selon l'une des revendications 1 à 4, caractérisé en ce qu'il (18.1,18.2) comporte des moyens de liaison (20.1, 20.2, 21.1, 21.2, 22.1, 22.2, 23.1, 23.2) qui sont conformés, pour établir une liaison par formes complémentaires avec un autre élément d'enveloppe.

6. Elément d'enveloppe selon l'une des revendications 1 à 5, caractérisé en ce qu'il est agencé sous la forme d'une demi-coque tubulaire (18.1, 18.2) servant à isoler des tubes à câbles (17).

7. Elément d'enveloppe selon la revendication 5 ou 6, caractérisé en ce que des moyens de liaison (20.1, 20.2, 21.1, 21.2, 22.1, 22.2, 23.1, 23.2) sont formés sur des surfaces de raccordement frontales (24.1, 24.2) et/ou sur des surfaces de raccordement (19.1, 19.2) situées sur des côtés longitudinaux.

8. Elément d'enveloppe selon l'une des revendications 5 à 7, caractérisé en ce que les moyens de liaison sont formés par une structure à nervures-rainures réalisant un encliquetage ou une liaison de force (20.1, 20.2, 21.1, 21.2).

9. Elément d'enveloppe selon l'une des revendications 7 ou 8, caractérisé en ce que sur une extrémité frontale (25.2, 31) sont formés des moyens (27,28.1; 31, 32.2, 33) servant à fixer selon une liaison de force une extrémité frontale non usinée (26;30) d'un autre élément d'enveloppe.

10. Elément d'enveloppe selon l'une des revendications 7 à 9, caractérisé en ce que des surfaces de raccordement sont pourvues d'une structure de nervures (37.1, 37.2) disposées en zig-zag en coupe transversale.

11. Système d'isolation pour des installations telles que des tronçons de conduites tubulaires, des soupapes, des pompes et analogues, constituées de plusieurs éléments d'enveloppe pouvant être assemblés, caractérisé en ce que les éléments d'enveloppe (52.1, 52.2) sont formés respectivement d'un seul tenant en polystyrène expansé, qui résiste à la chaleur, que des éléments auxiliaires flexibles de support (60.1, ..., 60.6, 63.1, 63.2; 61.1, ..., 61.4, 64.1, 64.2) sont formés sur le côté intérieur de l'élément enveloppe (52.1, 52.2) de telle sorte que le système d'isolation assemblé est retenu sur les appareils ou les installations indépendamment des dimensions extérieures précises desdits appareils ou desdites installations et que des renfoncements de paroi (45.1, 45.2, 45.3) sont associés aux systèmes auxiliaires de support (44.1, 44.2, 44.3) de manière à fournir un espace latéral, dans lequel les systèmes auxiliaires de support (44.1, 44.2, 44.3) peuvent s'écarter par déformation.

12. Système d'isolation selon la revendication 11, caractérisé en ce qu'il est constitué précisément de deux éléments d'enveloppe (1,2), un élément ayant une forme de profil en U en coupe transversale et l'autre une forme de profil en C en coupe transversale, et qu'au niveau de leurs côtés ouverts respectifs, les deux éléments d'enveloppe (1,2) sont accordés l'un sur l'autre du point de vue des dimensions.

13. Système d'isolation selon l'une des revendications 11 ou 12, caractérisé en ce que les éléments d'enveloppe (1,2) comportent des faces frontales (1.4, 2.6) comportant des évidements hémisphériques (5.1, 5.2) servant à former des ouvertures nécessaires pour des canalisations ou lignes d'arrivée et de départ.

14. Système d'isolation selon l'une des revendications 11 à 13, caractérisé en ce qu'au moins l'un des éléments d'enveloppe (2) comporte frontalement des moyens de guidage (4.1, 4.2).

15. Système d'isolation selon l'une des revendications 11 à 14, caractérisé en ce que les éléments d'enveloppe (1,2) peuvent être réunis sans accrochage.

16. Système d'isolation selon l'une des revendications 11 à 15, caractérisé en ce qu'au moins une bande (7.1, 7.2) et au moins un système de fermeture à serrage (8.1, 8.2) sont prévus pour la liaison des éléments d'enveloppe (1,2).

17. Système d'isolation selon l'une des revendications 11 à 16, caractérisé en ce qu'un élément d'enveloppe (1) comporte un perçage (6) sous la forme d'une ouverture pour le passage d'un axe de roue de réglage de soupape.

18. Système d'isolation selon l'une des revendications 11 à 17, caractérisé en ce que les éléments d'enveloppe (1,2) possèdent une épaisseur de paroi égale à au moins 3 cm et de préférence égale à 4 cm.

19. Système d'isolation selon l'une des revendications 11 à 18, caractérisé en ce qu'un agent retardateur de flamme est mélangé au polystyrène expansé.
